# EUROPÄISCHE PATENTSCHRIFT

(11) **EP 0 621 133 B1**
(45) Veröffentlichungstag und Bekanntmachung des Hinweises auf die Patenterteilung: **16.10.1996**
(21) Anmeldenummer: 93106545.2
(22) Anmeldetag: 22.04.1993
(51) Int. Cl.: B41F 13/00, B41F 13/14, B41F 13/28, H02K 7/14

(54) **Verfahren und Anordnung für einen Elektromotor zum Antrieb eines Drehkörpers, insbesondere des druckgebenden Zylinders einer Druckmaschine**
Method and arrangement for an electric motor for driving a rotary body, in particular a printing cylinder of a printing machine
Procédé et arrangement pour un moteur électrique pour entraîner un corps de rotation, en particulier un cylindre d'imprimerie

(43) Veröffentlichungstag der Anmeldung: 26.10.1994
(60) Teilanmeldung: 95119819.1
(73) Patentinhaber: BAUMÜLLER NÜRNBERG GMBH, D-90482 Nürnberg (DE); BAUMÜLLER ANLAGEN-SYSTEMTECHNIK GmbH Co., W-8500 Nürnberg 30 (DE)
(72) Erfinder: Müller, Dieter, D-91235 Hartenstein (DE); Götz Fritz Rainer, Dr.-Ing., W-8507 Oberasbach (DE)
(74) Vertreter: Matschkur, Götz, Lindner Patent- und Rechtsanwälte

(56) Entgegenhaltungen:
- EP-A- 0 244 034
- EP-A- 0 521 577
- DE-A- 4 138 479
- DE-C- 3 136 703
- DE-U- 8 703 410
- FR-A- 2 391 073
- GB-A- 878 453
- GB-A- 2 146 291
- US-A- 2 022 696

## Beschreibung

Die Erfindung betrifft eine Anordnung eines Elektromotors zum Antrieb eines an einer Wandung drehgelagerten Drehkörpers, wobei vom Elektromotor der Rotor mit dem Drehkörper zu dessen Direktantrieb steif und drehfest verbunden ist, und der Stator an der Wandung lösbar steif und ortsfest abgestützt ist, wobei die Anordnung vor allem in einer Druckmaschine, insbesondere Offsetmaschine, anwendbar ist. Darin stellen die mehreren, für die Druckgebung zusammenwirkenden Zylinder, die drehbar, bezüglich der Diagonal-, Seiten- und Umfangsregister verstellbar sowie aneinander anstellbar zur Bildung eines Papiereinzugs gelagert sind, die relevanten Drehkörper dar. Ferner betrifft die Erfindung ein Verfahren zum Positionieren solcher Drehkörper quer, schräg und/oder diagonal bezüglich deren Drehachse unter Verwendung dieser gegebenenfalls in einer Druckmaschine eingesetzten Anordnung.

Bekanntlich werden Druckwerke von Offsetmaschinen von einem Hauptantrieb angetrieben, der seine Antriebsleistung über eine mechanische Längswelle auf die Einzelaggregate der Druckmaschine verteilt. Die Druckwerke sind durch diese mechanische Längswelle derart miteinander verbunden und gekoppelt, daß auch deren Synchronlauf zueinander sichergestellt ist. Zur praktischen Realisierung ist allerdings ein komplexes mechanisches System mit einer Vielzahl unterschiedlicher Komponenten wie z.B. Getriebe, Kupplungen, Spindeln, Schlitten usw. notwendig. Die hieraus resultierenden Schwachpunkte wie Übertragungsfehler aufgrund Nachgiebigkeiten mechanischer Übertragungsglieder, Spiel und Reibungsumkehrspannen, Elastizitäten, zusätzliche große Trägheitsmassen sowie zahlreiche, niedriggelegene Eigenfrequenzen beeinträchtigen die Druckbildgüte und Registergenauigkeit des jeweiligen Druckwerks.

Deshalb sind Versuche bekannt, diese mechanische Längswelle zwischen den einzelnen Druckwerken durch eine "elektrische Längswelle" zu ersetzen: es wird jedem Druckwerk ein separater, elektromotorischer Antrieb zugeordnet. Um aber ohne mechanische Synchronisation gleichwohl den Gleichlauf der Druckwerke untereinander sicherzustellen, müssen die einzelnen Antriebe innerhalb eines gemeinsamen Regelungssystems koordiniert sein. Wegen des sehr komplexen inneren Aufbaus jedes Druckwerks sind jedoch sehr aufwendige und umfangreiche Regelalgorithmen notwendig. Vor allem durch die Vielzahl von Massen, Nachgiebigkeiten und Spielen in den mechanischen Übertragungsgliedern ist es der Regelungstechnik bisher nicht gelungen, ein solches Regelungssystem mit hinreichender Genauigkeit und Güte für den Synchronlauf von mehreren Druckwerken zu verwirklichen.

Eine derartige, mit den obengenannten Nachteilen behaftete Antriebsanordnung für den Antrieb der Zugwalzen von Druckmaschinen ist beispielsweise aus DE-GM 70 46 973 bekannt. Der dort beschriebene Antrieb der Zugwalze erfolgt durch einen am Seitengestell des Druckmaschinenrahmens fest angeschraubten Elektromotor, dessen Triebzapfen in einer Bohrung des Lagerzapfens der Zugwalze mit dieser fest verbunden sind. Zwar ist der Elektromotor mit stufenlos regelbarem Drehmoment und regelbarer Drehzahl ausgeführt, Elemente zu einer häufig erforderlichen Verstellung des Diagonalregisters und/oder für die Herbeiführung einer Anstellbewegung sind jedoch nicht vorhanden.

Bei einem bekannten Papierfeeder (DE-OS 40 11 268) wird eine Rückhalterolle von einem Elektromotor angetrieben, dessen Welle mittelbar über einen Drehmomentbegrenzer mit der Rückhalterolle gekoppelt ist, wodurch in Verbindung mit einer weiteren Transportrolle ein Drehmoment auf ein eingeklemmtes Blatt ausgeübt werden soll. Aufgrund des zwischengeschalteten Drehmomentbegrenzers ergeben sich jedoch Übertragungsfehler aufgrund der Nachgiebigkeit des Drehmomentbegrenzers, so daß eine derartige, Übertragungsfehler verursachende Anordnung für Druckmaschinenwalzen nicht geeignet ist, um eine hohe Druckbildgüte und Registergenauigkeit zu erreichen.

Ferner ist aus DE-OS 27 18 856 bekannt, bei einer Rollenrotations-Offsetdruckmaschine exzentrisch gelagerte Platten- und Gummituchzylinder zu verwenden, wobei die Exzenter für die Plattenzylinder zur Diagonalregisterverstellung verwendet sind. Allerdings erfolgt der Antrieb der Zylinder nicht direkt, sondern mittelbar über Antriebsritzel und Zahnräder, so daß zwischen diesen ein Zahnspiel stattfindet, welches die Druckqualität und -Genauigkeit aus den obengenannten Gründen beeinträchtigt. Bei einer anderen bekannten Antriebsanordnung (US-PS 3 817 174) werdem exzentrische Lagerbuchsen mittelbar über ein Kurbelgestänge gedreht, das von einem Drucklufthubzylinder angetrieben wird und ebenfalls zu Nachgiebigkeiten und Ungenauigkeiten führt.

Auch bei der in US-PS 3 753 016 gezeigte Antriebsanordnung, bei der zwischen Stator und Rotor ein Luftlager vorgesehen ist, ist eine eine Diagonalregisterverstellung erlaubende Beweglichkeit der anzutreibenden Welle nicht gegeben.

Auch bei der in JP A2 63-288 752 gezeigten Bremsanordnung mit Generator-Bremsbetrieb, bei der eine Tintenrolle über eine Kupplung mit einer vom Rotor umgebenen Bremswelle verbunden ist, ist eine Direktverbindung Rolle-Bremsachse ausgeschlossen, so daß es infolge der Nachgiebigkeit der Übertragungsglieder und der damit verbundenen Elastizitäten zu Ungenauigkeiten und Übertragungsfehlern kommt.

Es ist eine Anordnung der eingangs genannten Art bei einem Trockenzylinder einer Papier-, Karton- oder Streichmaschine bekannt (DE-U-87 03 410.7). Der Wellenzapfen des Zylinders ist in einem ortsfest abgestützten Lagergehäuse gelagert. Zwischen dem Lagergehäuse und einer Stirnwand des Zylinders greift ein Antriebsmotor an. Das Lagergehäuse ist hohlzylindrisch zu einem Gehäuse für den Antriebsmotor erweitert, dessen Elektromagnetpole aufweisender Ständer in diesem hohlzylindrischem Gehäuse angeordnet ist. Der Dauermagnetpole aufweisende Läufer des Antriebsmotors ist als hohlzylindrischer Ring ausgebildet und auf den Wellenzapfen des Trockenzylinders aufgesteckt.

Demgegenüber wird das der Erfindung zugrundeliegende Problem aufgeworfen, bei einer Antriebsanordnung unter Beibehaltung der Direktverbindung zwischen dem Drehkörper und dem Rotor des Elektromotors Verstellbewegungen für den Drehkörper, vor allem quer und/oder schräg zu seiner Drehachse, zu ermöglichen, ohne daß der Elektromotor-Luftspalt zwischen Rotor und Stator funktionsunfähig verkleinert wird. Dabei sollen die Drehkörper-Verstellbewegungen einen solchen Umfang erreichen können, daß die Antriebsanordnung für einen breiten Anwendungsbereich, insbesondere für die druckgebenden Zylinder von Druckmaschinen geeignet ist.

Zur Lösung wird bei einer Anordnung eines Elektromotors mit den eingangs genannten Merkmalen erfindungsgemäß vorgeschlagen, daß der Drehkörper bezüglich seiner Drehachse schräg, quer und/oder diagonal verstellbar ist, indem der Drehkörper innerhalb der Wandung mit exzentrisch ausgelenkt geführter Drehachse drehgelagert ist, und eine Nachführeinrichtung auf den Stator dergestalt einwirkend angeordnet ist, daß er die Drehkörper/Rotor-Verstellbewegungen entsprechend nachvollzieht. Bei erfindungsgemäßer Verwendung dieses elektrischen Direktantriebs zum Antreiben und/oder Positionieren eines Zylinders einer Druckmaschine kann für jeden Zylinder bzw. jede Druckwerkswalze ein spielfreier, trägheitsarmer und mechanisch steifer Antriebsstrang aufgebaut werden. Dies ergibt eine hohe Regeldynamik, so daß sich exakte Bahnführung, konstante Bahnspannung und gleichbleibende Farbgebung über die so ermöglichte, hochpräzise Registersteuerung und Druckanstellung erreichen lassen. Die relevanten Drehkörper (beispielsweise Platten- und Gummituch-Zylinder in einem Druckwerk) werden erfindungsgemäß direkt angetrieben, so daß die oben diskutierte Regelungsaufgabe bzw. die notwendigen Regelsysteme drastisch vereinfacht werden: die zu bewegenden Massen sind unter Ausschluß von Elastizitäten, Nachgiebigkeiten und Spielen direkt mit dem Rotor des antreibenden Elektromotors steif und fest verbunden. Dabei ist es zweckmäßig, auch den Stator des Elektromotors mit einer stationären Wandung, beispielsweise der Druckmaschinenwand, elastizitäts- und spielfrei zu verbinden.

Zwar ist eine Rotationsdruckpresse bekannt (GB-A-2 146 291), bei der im Direktantrieb mit der Antriebswelle von Zylindern verbundene Antriebsmotoren mittels weiterer Schrittmotoren von einer übergeordneten Steuereinheit verstellt werden können. Jedoch können über jeweilige, linear geführte Schlitten den Zylinderachsen mit den Antriebsmotoren nur lineare Verschiebebewegungen erteilt werden. Der Zweck der Linearverschiebung der Farbwalze und des Plattenzylinders besteht einzig darin, alle Farbwalzen der Farbeinrichtung und alle Plattenzylinder einer Mehrfarbendruckpresse gegenüber dem gemeinsamen Druckzylinder zu verschieben, so daß alle Farben gleichzeitig in ihre Druckstellung gelangen. Eine Verstellung der Seitenregister quer zur Laufrichtung des Bedruckstoffes oder eine Verstellung der Diagonalregister (Drehung des Druckbildes um eine Achse senkrecht zur Rotationsachse) ist damit nicht gegeben.

Es liegt im Rahmen der Erfindung, eine bauliche Integration des Rotors eines Elektromotors mit dem Druckzylinder herbeizuführen, so daß gleichsam der Druckzylinder den Rotor des Elektromotors bildet. In der Regel ist der Druckzylinder zu seinem Drehantrieb mit einem axial vorspringenden Ansatz versehen; dabei ergibt sich eine vorteilhafte Weiterbildung der genannten Erfindungsalternative dahingehend, daß der Antriebs-Ansatz, insbesondere Wellenzapfen und/oder -stummel, einstückig mit dem Rotor ausgebildet ist und/oder den Rotor oder wenigstens einen Teil davon bildet. In Weiterbildung des Gedankens, den Druckzylinder, insbesondere dessen Ansatz für seinen Drehantrieb, zum Rotor des Elektromotors für den obenerläuterten Direktantrieb zu machen, sind auf oder über dem Außenumfang des Ansatzes bzw. Rotors ein oder mehrere Magnetelemente und/oder ein magnetischer oder magnetisierbarer Werkstoff angeordnet.

Um den Wellenzapfen bzw. Ansatz eines herkömmlichen Druckzylinders schnell im Sinne des erfindungsgemäßen Direktantriebs bzw. der (baulichen) Integration mit dem Rotor des Elektromotors umbilden zu können, wird nach einer anderen Weiterbildung dieser Erfindungsalternative vorgeschlagen, daß der Ansatz von einer aufschiebbaren Hülse umgeben ist, die Teil eines Rotors bildet. Gegebenenfalls ist die Hülse auf ihrem Außenumfang mit dem oder den Magnetelementen und/oder dem magnetischen Werkstoff beschichtet.

Andererseits kann der Ansatz bzw. Wellenzapfen des Druckzylinders mit der Hülse baulich zu einem einzigen Teil zusammengefaßt sein, auf dem dann gegebenenfalls die Magnetelemente aufgebracht sind.

Die Anwendungsflexibilität erhöht es, wenn nach einer weiteren Ausbildung dieser Erfindungsalternative an der Stirnseite des Druckzylinders ein Halterungsflansch angebracht ist, an dem der erfindungsgemäße Ansatz bzw. Rotor gegebenenfalls lösbar befestigt ist.

Das erfindungsgemäße Konzept des Direktantriebs für jeden relevanten Drehkörper in der Druckmaschine eröffnet die Möglichkeit einer weiteren, vorteilhaften Ausbildung, nämlich den Elektromotor im Rahmen einer Steuerungskette oder eines geschlossenen Regelkreises zu betreiben und ihn dabei als Stellglied für die Dreh- oder Winkelstellung des Zylinders auszubilden; damit läßt sich z.B. eine geregelte Umfangsregisterstellung realisieren.

Ist der Stator nebst Motorgehäuse direkt an der Wandung ortsfest und steif fixiert, ist es vor allem bei Anwendungen in Druckmaschinen notwendig, daß der direkt angetriebene Zylinder und mithin auch der daran steif und dicht (mit möglichst kurzen Längen) angesetzte Rotor zur Realisierung von Druck-An- und Druck-Ab-Bewegungen sowie Diagonalregister-Verstellungen exzentrisch auslenkbar sind. Dem wird mit einer weiteren Ausbildung der Erfindung Rechnung getragen: beim Elektromotor sind Rotor und Stator zueinander mit einem solchen Abstand angeordnet und/oder derart verstellbar ausgebildet, daß der von diesen begrenzte Luftspalt sich ausreichend verändern und dabei entsprechende, exzentrische Auslenkungen auffangen kann. So können Verstellbewegungen des steifen Drehkörper-Rotor-Verbunds ausgeglichen werden, obgleich das Motorgehäuse mit Stator an der stationären Wandung steif und ortsfest angebracht ist. Diese Erfindungsausbildung läßt sich praktisch durch einen Elektromotor realisieren, bei dem der Rotor dem Stator gegenüberliegend angeordnet ist, ohne mit letzterem über Lager oder dergleichen verbunden zu sein.

Andererseits ist es denkbar, daß bei Drehkörper-/Rotor-Verstellbewegungen größeren Umfangs der Luftspalt sich nicht so ausreichend bemessen läßt, um diese ausgleichen zu können. Dem wird mit dem Merkmal der Erfindung Rechnung getragen, daß eine Nachführeinrichtung vorgesehen ist, die auf den Stator einwirkt und so ausgebildet ist, daß der Stator die Drehkörper-/Rotor-Verstellbewegungen, jedenfalls solange diese die Abmessungen des Luftspalts überschreiten, nachvollzieht. Die Nachführeinrichtung kann mehrere Funktionskomponenten umfassen: eine in Achsrichtung des Motors bzw. Zylinders gerichtete Linearführung, um den Stator an Seitenregister-Verstellungen des Zylinders anzupassen; eine bezüglich der Zylinder-/Motor-Achse radial auslenkende Exzenterführung, um den Stator auf Anstellbewegungen oder Diagonalregister-Verstellungen des Zylinders einzustellen, die - wie an sich bekannt - mittels exzentrischer Auslenkung der Zylinder-/Rotor-Drehachse herbeigeführt werden. Dabei erscheint es notwendig, daß die Drehkörper-/Rotor- und andererseits die Stator-Exzenterführungen einander entsprechend, insbesondere zueinander kongruent, ausgebildet sind, um die Nachführung vor allem in Form sich deckender, exzentrischer Umlaufbahnen von Stator und Drehkörper/Rotor zu gewährleisten. Die Genauigkeit der Nachführung läßt sich dadurch fördern, daß beide Exzenterführungen durch eine gemeinsame, lösbare, vorzugsweise mechanische Verbindungseinrichtung miteinander gekoppelt und/oder synchronisiert sind.

Um eine stationäre, steife Abstützung des Stators an der Wandung zu erreichen, ist in weiterer Ausbildung der Erfindung eine Feststelleinrichtung vorgesehen, die mit der Nachführeinrichtung derart verbunden, insbesondere synchroniert ist, daß sie nach Beendigung der aktiven Nachführung des Stators diesen relativ zur Wandung fixiert.

Zur axialen Linearverschiebung oder exzentrischen Auslenkung des Stators entsprechend den Drehkörper-/Rotor-Verstellbewegungen ist es zweckmäßig, eine oder mehrere, gesonderte Bewegungseinrichtungen vorzusehen: z.B. einen an einer Exzenterbuchse, die den Stator fest umgibt, angreifenden Drehantrieb oder einen Linearantrieb, der am axial verschiebbar gelagerten Stator angreift, um jeweils den Stator zur Beibehaltung eines ausreichenden Luftspalts nachzuführen. Diese Nachführbewegungen lassen sich in ihrer Genauigkeit noch weiter verbessern, indem die genannten Dreh- oder Linearantriebe, die jeweils dem Stator einerseits und dem Drehkörper-/Rotor-Verbund andererseits zugeordnet sind, bei Registerverstellung oder Anstellbewegung miteinander gekoppelt und/oder synchronisiert sind.

Weitere Einzelheiten, Merkmale und Vorteile auf der Basis der Erfindung ergeben sich aus der nachfolgenden Beschreibung eines bevorzugten Ausführungsbeispiels der Erfindung und anhand der Zeichnungen. Diese zeigen mit jeweils schematischer Darstellung in
- Fig. 1: eine Übersicht über die Anlage einer Offsetmaschine,
- Fig. 2: vergrößert einen Ausschnitt II der Fig. 1 mit einer Seitenansicht von der Lage der anzutreibenden Zylinder eines Druckwerks,
- Fig. 3: eine Vorderansicht auf die Druckwerkszylinder gemäß Richtung III in Fig. 2,
- Fig. 4: eine Draufsicht auf die Druckwerkszylinder gemäß Richtung IV in Fig. 3,
- Fig. 5: eine Fig. 2 entsprechende Seitenansicht der verstellten Zylinder mit Andeutung der Zylinder-Freiheitsgrade,
- Fig. 6: vergrößert den Ausschnitt VI in Fig. 5,
- Fig. 7: im axialen bzw. Längsschnitt die Anbringung des Elektromotors an Druckwerkszylinder und Wandung,
- Fig. 8: eine Richtungspfeil VIII in Fig. 7 entsprechende Stirnansicht
- Fig. 9: eine Richtungspfeil IX in Fig. 7 entsprechende Stirnansicht und
- Fig. 10: in schematischer Längsansicht einen erfindungsgemäß ausgebildeten Druckzylinder.

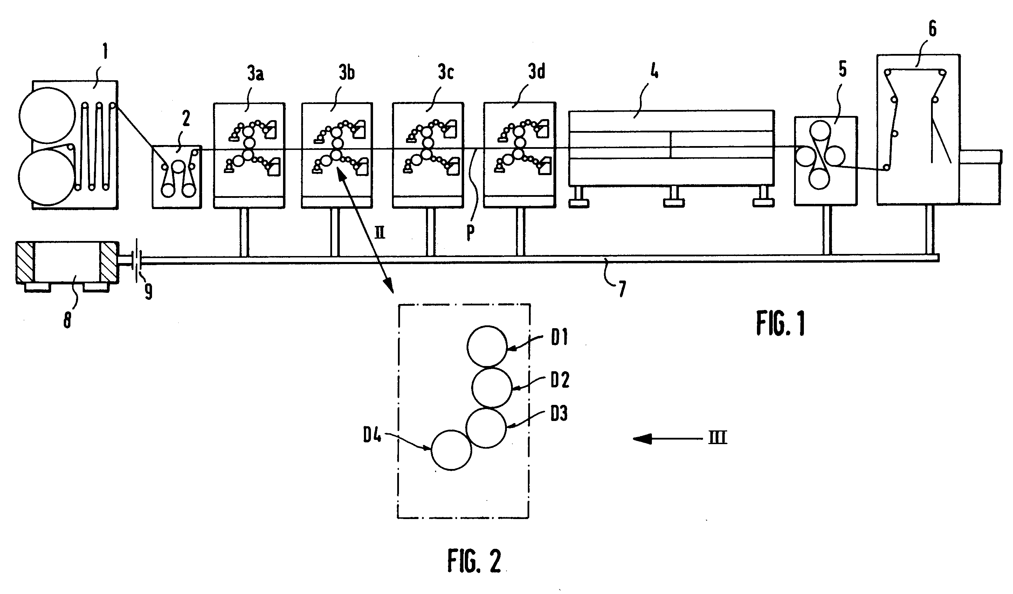

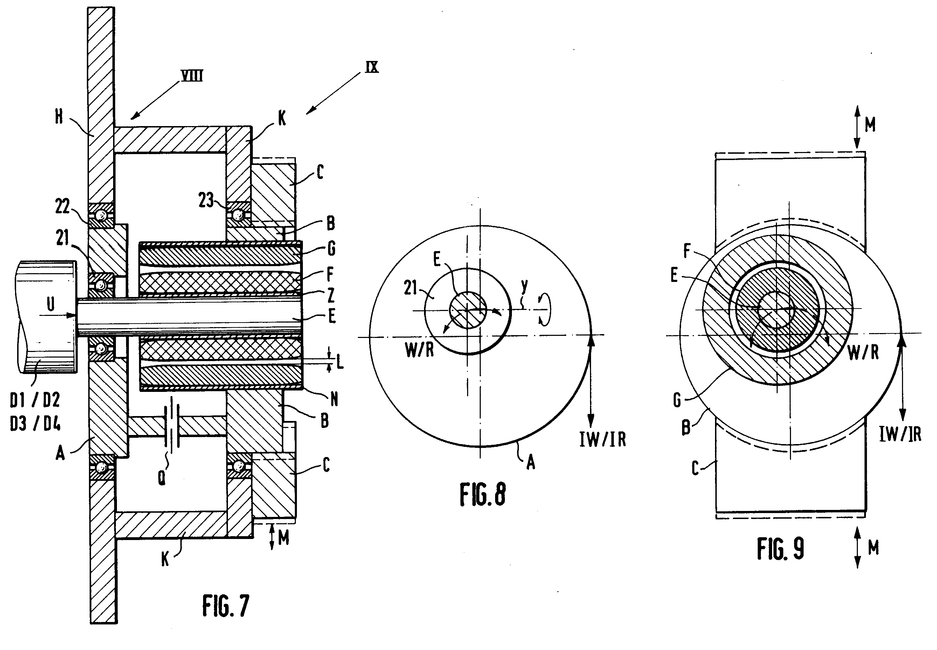

Gemäß Fig. 1 besteht eine an sich bekannte Offsetdruckanlage (in der Reihenfolge von links nach rechts) aus einem Rollenträger 1, einem Einzugwerk 2, mehreren, hintereinander angeordneten Druckwerken 3 a, 3 b, 3 c und 3 d, einem Trockner 4, einer Kühlpartie 5 und einem Falzapparat 6. Gemäß bisherigem Stand der Technik sind die Druckwerke 3 a - 3 d, die Kühlpartie 5 und der Falzapparat 6 von einer gemeinsamen, mechanischen Längswelle 7 und einem zugehörigen Antriebsaggregat 8 mit Kupplung 9 angetrieben und synchronisiert. Ein Ziel der Erfindung, von der das Ausführungsbeispiel in den Fig. 7 - 9 dargestellt ist, besteht darin, diese mechanische Längswelle 7 zu ersetzen.

In Fig. 2 ist die Lage der anzutreibenden Zylinder eines an sich bekannten Offsetmaschinen-Druckwerks veranschaulicht: in vertikaler Reihenfolge von oben nach unten ist ein Plattenzylinder D 1, auf den die Druckplatte gespannt ist, darunter ein Gummituchzylinder D 2, auf den das Gummituch gespannt ist, darunter ein weiterer Gummituchzylinder D 3 und darunter ein weiterer Plattenzylinder D 4 angeordnet. Die beiden oberen Platten- und Gummituchzylinder D 1, D 2 bilden drucktechnisch die (obere) Schöndruckseite, die beiden unteren Gummituch- und Plattenzylinder D 3, D 4 drucktechnisch die (untere) Widerdruckseite.

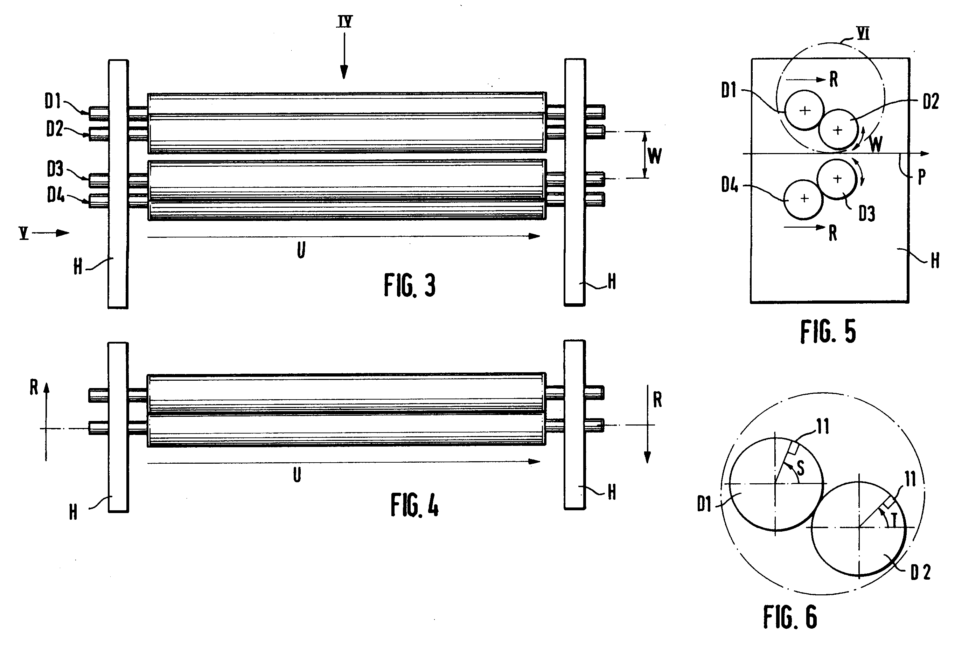

Gemäß Fig. 3 - 5 ist die Lage der Zylinder D 1 - D 4 zueinander etwas verändert dergestalt, daß sie sowohl in Vorder- bzw. Frontansicht (Fig. 3) als auch in Draufsicht (Fig. 4) einander teilweise überdecken. Die in der Druckwerkswandung H gelagerten Plattenzylinder D 1, D 4 und Gummituchzylinder D 2, D 3 sind mit folgenden Freiheitsgraden versehen: Um die Lage des Druckbildes quer zur Laufrichtung des Papiers P beeinflussen zu können, sind vor allem die Plattenzylinder D 1, D 4 in Längsrichtung U, also parallel zu ihrer Mittelachse, verstellbar gelagert. Diese Richtungsverstellung wird in der Drucktechnik "Verstellung der Seitenregister" genannt. Um die Lage des Druckbildes um eine Achse senkrecht zur Zylinder-Mittel-/Längs-Achse drehen zu können, werden die Plattenzylinder D 1, D 4 jeweils an ihren Enden in Querrichtung R verstellt. Diese Bewegungsart wird "Verstellen der Diagonalregister" genannt.

Vor dem eigentlichen Druckvorgang ist das zu bedruckende Papier P zunächst zwischen die Gummituchzylinder D 2, D 3 einzuziehen. Zu diesem Zweck wird es in Papierlaufrichtung zwischen den Gummituchzylindern D 2, D 3 hindurchgeführt. Diese Zylinder sind bei diesem Vorgang des Papiereinziehens zunächst voneinander getrennt, so daß sie einen gemeinsamen Einzugsspalt begrenzen. Ist die Offsetmaschine betriebsbereit, werden den Gummituchzylindern D 2, D 3 jeweils eine Anstellbewegung W erteilt, so daß sie zusammengefahren werden und sich gegeneinanderpressen. Im Zuge der Anstellbewegung W werden die Gummituchzylinder D 2, D 3 auch gegen die Plattenzylinder D 1, D 4 gedrückt. Diese Stellung ist in Fig. 2 dargestellt und wird in der Drucktechnik als "Druck-An" bezeichnet.

Aus Fig. 6 geht der Freiheitsgrad zur Beeinflussung der Lage des Druckbildes in Laufrichtung des Papiers P hervor: die Winkelposition S bzw. T des Plattenzylinders D 1 bzw. Gummituchzylinders D 2 muß entsprechend verändert werden, was erfindungsgemäß mit einem Elektromotor in Anordnung zum Direktantrieb (vgl. Fig. 7 - 9) erfolgen kann. Entsprechendes gilt für die (in Fig. 6 nicht dargestellten) Zylinder D 4, D 3. Mittels Spannkanälen 11 kann, wie an sich bekannt, die Druckplatte oder das Gummituch auf dem jeweiligen Zylinder D 1, D 2 angeordnet werden.

Gemäß Fig. 7 - 9 ist auf der Antriebswelle E eines der vier oben genannten Zylinder D 1, D 2, D 3, D 4 die Rotorhülse Z des Rotorpakets F eines elektrischen Antriebsmotors unmittelbar und ortsfest fixiert. Die Rotorhülse Z bildet zusammen mit dem Rotorpaket F den Rotor des Elektromotors. Die Antriebswelle E, direkt umgeben von einem Kugellager 21, ist in der Wandung H drehbar gelagert. Das Kugellager 21 ist unmittelbar von einer Exzenterbuchse A umfaßt, welche über ein weiteres Kugellager 22 mit der Druckwerkswand H verbunden ist. Infolgedessen kann sich die Antriebswelle E relativ sowohl zur Druckwerkswandung H als auch zur Exzenterbuchse A um ihre Drehachse Y drehen. Wird die Exzenterbuchse A über einen (nicht gezeichneten, weil an sich bekannten) Drehantrieb, beispielsweise ein Hebelgestänge oder eine Verzahnung, rotiert, entsteht eine tangential an der Exzenterbuchse A angreifende Kraft IW oder IR. Diese Kraft setzt sich über das erste, innere Kugellager 21 in eine radial ausgelenkte, exzentrische Umlaufbahn W bzw. R der Drehachse Y der Antriebswelle E des jeweiligen Zylinders D 1, D 2, D 3 oder D 4 um. Dies beruht darauf, daß die Exzenterbuchse A an ihrer Innenseite mit dem Außenring des ersten, inneren Kugellagers 21 und an ihrer Außenseite mit dem Innenring des zweiten, äußeren Kugellagers 22 jeweils ortsfest verbunden ist. Der Innenring des ersten Kugellagers 21 sitzt ortsfest auf der Antriebswelle E, während der Außenring des zweiten Kugellagers 22 an der Wandung H unbeweglich fixiert ist. Mit dieser Exzenterbuchsen-Lageranordnung 21, 22, A läßt sich eine Übertragung der vom Drehantrieb erzeugten, tangentialen Kraft IW bzw. IR von der Exzenterbuchse A auf die Gummituchzylinder D 2, D 3 bzw. die Plattenzylinder D 1, D 4 bewirken: die Drehachse Y des jeweiligen Zylinders beschreibt dann die Anstellbewegungsbahn W (bei den Gummituchzylindern D 2, D 3) bzw. die Diagonalregister-Verstellungsbahn R (bei den Plattenzylindern D 1, D 4). In der Ansicht der Fig. 8 sind diese radial-exzentrischen Auslenkungen W/R der Antriebswelle E veranschaulicht.

Gemäß Fig. 7 sind an der Außenseite der Wandung H im Bereich von deren Aussparung für die Antriebswelle E, die Exzenterbuchse A und die beiden Lager 21, 22 zwei Brückenvorsprünge K jeweils mit L-artigem Profil fest angesetzt, dergestalt, daß die jeweiligen, kürzeren L-Schenkel einander fluchtend zugewandt sind. Von deren gegenüberliegenden Seiten ist der Außenring eines weiteren, dritten Kugellagers 23 ortsfest eingeklemmt. Dessen Innenring umfaßt ebenfalls ortsfest eine zweite Exzenterbuchse B, deren ringförmige Innenseite auf der Statorhülse N aufgesetzt und daran ortsfest bzw. steif fixiert ist. Mithin entspricht diese Anordnung und Lagerung des von der Statorhülse eingefaßten Statorpakets G etwa der des Rotorpakets F bzw. der damit ortsfesten Antriebswelle E, wenn auch mit der Ausnahme, daß der Stator G, N des Elektromotors zwar gegenüber der Wandung H bzw. dessen Brückenansatz K, nicht aber gegenüber der zweiten Exzenterbuchse B verdrehbar ist. Infolgedessen ist die in Fig. 9 veranschaulichte Möglichkeit gegeben, den Stator G, N etwaigen Anstellbewegungen W oder Diagonalregister-Verstellbewegungen R des jeweiligen Zylinders D 1 - D 4 nachzuführen. Da sich die beiden Exzenterbuchsen A, B bei bestimmter Winkelstellung in ihren Außendurchmessern decken und deren jeweilige, äußere Kugellager 22, 23 in ebenfalls miteinander kongruenten Kreisringprofilen ausgebildet und angeordnet sind, ist gemäß Fig. 9 für den Stator G, N sogar eine mit den Bewegungen W/R des Rotors F, Z sich vollständig deckende bzw. übereinstimmende Nachführung möglich, wenn mittels des genannten oder eines weiteren Drehantriebs (Verzahnung oder Hebelgestänge) auf die zweite Exzenterbuchse B dieselbe Tangentialkraft IW bzw. IR ausgeübt wird. Sind gemäß Fig. 7 die beiden Exzenterbuchsen A, B in der Drehstellung, in der sie sich mit ihren Außendurchmessern axial gesehen decken (vgl. oben), mittels einer mechanisch lösbaren Verbindungseinrichtung Q starr aneinandergekoppelt, ist keine weitere Dreheinrichtung speziell für die Exzenterbuchse B erforderlich.

Nachdem der Stator G, N die Zylinder-/Rotorbewegungen W/R nachvollzogen hat, ist seine ortsfeste und steife Abstützung gegenüber der Wandung H bzw. deren Brückenansatz K notwendig. Hierzu sind Blockierklötze C um die Stator-Exzenterbuchse B herum, vorzugsweise diametral gegenüberliegend, angeordnet. Deren der Exzenterbuchse B zugewandte (Innen-)Seiten sind nach Art von Bremsbacken derart konkav gewölbt, daß sie die Exzenterbuchse B von außen formschlüssig umfassen und mithin deren Drehung im Lager 23 um die Achse Y blockieren können. Das Betätigen oder Lösen der Blockierung der Exzenterbuchse B erfolgt, indem den Blockierklötzen C eine Verschiebebewegung M nach radial innen (Arretieren des Stators E gegenüber der Wandung H) oder nach außen (Lösen dieser Arretierung) erteilt wird.

In Fig. 7 ist schließlich noch die Seitenregister-Verstellbewegung U für den jeweiligen Zylinder D 1 - D 4 nebst starr daran befestigtem Rotor F, Z angedeutet, die zugehörige Linearführung, gegebenenfalls mit Linearantrieb, ist jedoch der Übersichtlichkeit halber nicht gezeichnet. Im Rahmen der Erfindung wäre dann auch eine Nachführung des Stators G der Seitenregister-Verstellbewegung U ebenfalls mittels Linearführung und -antrieb denkbar.

Eine Stator-Nachführung der Bewegung des jeweiligen Zylinders D 1 - D 4 ist vor allem dann angebracht, wenn die Anstellbewegung W eines der Gummituchzylinder D 2, D 3 oder die Diagonalregister-Verstellung R eines der Plattenzylinder D 1, D 4 zu groß ist, als daß noch ein Ausgleich über den Luftspalt L zwischen Rotorpaket F und Statorpaket G möglich wäre. Die Nachführung läßt sich dann mit folgenden Verfahrensschritten realisieren :

Nachdem die beiden Exzenterbuchsen A, B in eine Drehstellung gebracht sind, in der ihre beiden Außenprofile bzw. Außenradien sich decken, werden sie mittels der Verbindungseinrichtung Q parallel zur Achsrichtung starr aneinandergekoppelt. Dann wird an wenigstens einer der beiden Buchsen A, B mittels des genannten Drehantriebs (Hebelgestänge oder Verzahnung) eine Tangentialkraft IW oder IR in Angriff gebracht und gleichzeitig die Arretierung des Stators G, N bezüglich des Brückenansatzes K gelöst, indem die Blockierklötze C in Schieberichtung M radial nach außen bewegt werden. Dann kann auch der Stator G, N bezüglich der Rotor-Drehachse Y eine exzentrische Umlaufbahn beschreiben, wenn über die Verbindungseinrichtung Q (z.B. Kupplung oder Mitnehmer) die Exzenterbuchse B bewegungsschlüssig mit der Exzenterbuchse A rotiert wird. Sind beispielsweise die Zylinder D 2, D 3 entsprechend der Anstellbewegung W eingeschwenkt, d.h. die Druck-An-Funktion ist erfolgt, oder ist die Diagonalregister-Verstellung R vervollständigt, wird die mechanische Verbindungseinrichtung Q gelöst, und es wirkt über die Exzenterbuchse A weiterhin die Anpreßkraft IW bzw. Diagonalregister-Verstellkraft IR auf den jeweiligen Zylinder. Gleichzeitig wird den Blockierklötzen C eine Verschiebung M radial nach innen erteilt, wobei sie die Exzenterbuchse B so festklemmen, daß diese nicht mehr rotierbar ist. Dabei entsteht eine starre und ortsfeste Verbindung der Exzenterbuchse B mit dem Brückenansatz K und der Druckwerkswandung H. So ist beispielsweise bei Druck-An-Stellung der Stator G spiel- und elastizitätsfrei gegen die Druckwerkswandung H abgestützt, wohingegen der Rotor F durch die beiden inneren und äußeren Kugellager 21, 22 spiel- und elastizitätsbehaftet mit der Druckwerkswand verbunden ist. Sämtliche Toleranzen durch Lagerspiele der beiden Kugellager 21, 22 sowie elastische Verformungen und Verlagerungen durch die noch anstehende Anstellkraft IW können bei fest arretiertem Stator G durch den Luftspalt des Elektromotors ausgeglichen werden. Dieser Effekt ist noch dadurch gefördert, daß der Elektromotor keine eigene Lagerung direkt zwischen Stator und Rotor besitzt. Mithin ist eine axiale und radiale Verschiebung von Stator zu Rotor nicht behindert, sondern grundsätzlich in begrenztem Umfang möglich. Die axiale Verschiebungsmöglichkeit längs des Luftspalts L kann vorteilhaft für die Seitenregister-Verstellung U ausgenützt werden.

Die Umfangsregister-Verstellung S, T (vgl. Fig. 6) läßt sich im Rahmen des erfindungsgemäßen Direktantriebs leicht durch eine Winkelregelung der Einzelantriebe bewerkstelligen.

Nach alledem kann aufgrund der Erfindung für alle Bewegungen und Verstellungen der Zylinder D 1 - D 4 (wie Anstellbewegung W, Diagonalregister-Verstellung R, Seitenregister-Verstellung U und Umfangsregister-Verstellung S, T) das Prinzip der direkten, steifen Anbindung des Rotors an den Zylinder und des Stators an die Druckwerkswand verwirklicht werden. Die noch erforderlichen Beweglichkeiten bzw. Beweglichkeitstoleranzen lassen sich über den Motor-Luftspalt axial und/oder radial ausgleichen.

Im Rahmen der Erfindung sind elektrische Antriebsmotoren der Ausführung mit Zylinderläufer und damit mit Radialfeld und der Ausführung mit Scheibenläufer und damit mit Axialfeld einsetzbar. Neben der eigentlichen Antriebsrotation ist die Leichtigkeit der Verschiebung bzw. Veränderung des Luftspalts bei Zylinderläufern eher in Axialrichtung und bei Scheibenläufern eher in Radialrichtung gegeben, weil hier der Luftspalt in Feldrichtung nicht verändert wird. Verschiebungen von Läufer bzw. Rotor zu Stator in Feldrichtung sollten eher von kleinerem Ausmaß sein und können gegebenenfalls durch das oben erläuterte Nachführen der Hauptbewegung für den Stator auf das Ausmaß von Beweglichkeitstoleranzen reduziert werden.

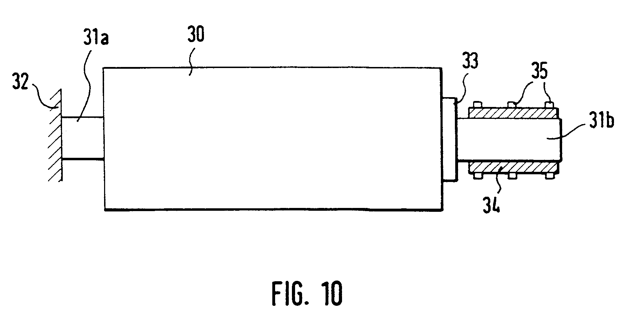

Gemäß Fig. 10 ist ein Druckzylinder 30 mit seinem ersten (in der Zeichnung linken) Wellenzapfen 31a ortsfest an der Wandung 32 einer (nicht gezeichneten) Druckmaschine angeordnet und dort mittels (nicht gezeichneter) Lager drehbar. Auf der dem ersten Zapfen 31a entgegengesetzten Stirnseite des Druckzylinders 30 ist ein Halterungsflansch 33 angeordnet, von dem ein zweiter (in der Zeichnung rechter) Wellenzapfen 31b vorspringt. Dieser ist von einer (querschnittlich) gezeichneten Hülse 34 umgeben, auf deren Außenumfang einzelne Magnetelemente 35 verteilt sitzen. Damit ist eine elektromagnetische Kopplung mit dem Stator eines (in Fig. 10 nicht vollständig gezeichneten) Elektromotores möglich, um den Druckzylinder 30 über den zweiten Wellenzapfen 31b und der darauf unverdrehbar sitzenden Hülse 34 in Rotation zu versetzen. Diese Konfiguration ist vor allem zum Einsatz in der Anordnung nach Fig. 7 - 9 geeignet, wobei die Magnetelemente 35 durch das Rotorpaket F ersetzt sein können.

## Patentansprüche

1. Anordnung eines Elektromotors (F, G) zum Antrieb eines an einer Wandung (H) drehgelagerten (S, T) Drehkörpers, wobei vom Elektromotor (F, G) der Rotor (F) mit dem Drehkörper (D1, D2, D3, D4) zu dessen Direktantrieb (E) steif und drehfest verbunden ist, und der Stator (G) an der Wandung (H) lösbar steif und ortsfest abgestützt ist, dadurch gekennzeichnet, daß der Drehkörper (D1, D2, D3, D4) bezüglich seiner Drehachse (Y) schräg, quer und/oder diagonal (R, W) verstellbar ist, indem der Drehkörper innerhalb der Wandung (H) mit exzentrisch ausgelenkt (A) geführter Drehachse (Y) drehgelagert (21, 22) ist, und eine Nachführeinrichtung (B, 23) auf den Stator (G) dergestalt einwirkend angeordnet ist, daß der Stator (G) die Drehkörper/Rotor-Verstellbewegungen (R, W) entsprechend nachvollzieht.

2. Anordnung nach Anspruch 1, dadurch gekennzeichnet, daß die Wandung (H) einen ortsfest angebrachten, vorzugsweise brückenartigen und/oder L-förmigen Ansatz (K) aufweist, an dem der Stator (G) angebracht ist.

3. Anordnung nach Anspruch 1 oder 2, dadurch gekennzeichnet, daß beim Elektromotor (F, G) Rotor (F) und Stator (G) zueinander mit einem solchen Abstand angeordnet und/oder derart verstellbar ausgebildet sind, daß der von diesen begrenzte Luftspalt (L) zum Ausgleich der Drehkörper/Rotor-Verstellbewegungen (R, W) veränderbar ist.

4. Anordnung nach Anspruch 3, dadurch gekennzeichnet, daß beim Elektromotor (F, G) der Rotor (F) ohne Lagerung am oder gegenüber dem Stator (G) angeordnet ist.

5. Anordnung nach einem der vorangehenden Ansprüche, dadurch gekennzeichnet, daß die Nachführeinrichtung (B, 23) für den Stator (G) eine in oder an der Wandung (H) oder gegebenenfalls deren Ansatz (K) angebrachte radial auslenkende Exzenterführung aufweist, die der Drehkörper/Rotor-Exzenterführung (A, 22) entspricht.

6. Anordnung nach Anspruch 5, dadurch gekennzeichnet, daß beide Exzenterführungen (A, 22; B, 23) zueinander kongruent angeordnet und/oder zur Herbeiführung sich deckender Umlaufbahnen (W, R) ausgebildet sind.

7. Anordnung nach Anspruch 5 oder 6, dadurch gekennzeichnet, daß beide Exzenterführungen (A, 22; B, 23) durch eine lösbare, vorzugsweise mechanische Verbindungseinrichtung (Q) miteinander gekoppelt und/oder synchronisiert sind.

8. Anordnung nach einem der vorangehenden Ansprüche, gekennzeichnet durch eine mit der Nachführeinrichtung (B, 23) in Wirkungsverbindung stehende Feststelleinrichtung (C) zum Abstützen, Arretieren und/oder zur steifen Anbindung des Stators (G) bezüglich der Wandung (H) und/oder deren Ansatzes (K).

9. Anordnung nach Anspruch 5, 6, 7 oder 8 in Verbindung mit Anspruch 5, dadurch gekennzeichnet, daß wenigstens die Stator-Exzenterführung (B, 23) als Exzenterbuchse (B) ausgeführt ist, die - von einem entsprechend exzentrischen Kugellager (23) umgeben - in die Wandung (H) eingelassen ist und den Stator (G) ortsfest umfaßt.

10. Anordnung nach Anspruch 8 und 9, dadurch gekennzeichnet, daß die Stator-Feststelleinrichtung (C) einen oder mehrere Blockierkörper aufweist, die zum Verstellen (M) und zur formschlüssigen Anlage an freie, vorzugsweise diametral entgegengesetzte Außenseiten der Exzenterbuchse (B) ausgebildet sind.

11. Anordnung nach Anspruch 9 oder 10, gekennzeichnet durch einen an einer oder mehreren Exzenterbuchsen (A, B) angreifenden Drehantrieb und/oder einen am axial verschiebbar gelagerten Stator angreifenden Linearantrieb.

12. Anordnung nach Anspruch 11, gekennzeichnet durch der Stator-Exzenterbuchse (B) und der Drehkörper/Rotor-Exzenterbuchse (A) zugeordnete Drehantriebe und/oder dem Stator (G) und dem Drehkörper/Rotor- Verbund (D1, D2, D3, D4; F) zugeordnete Linearantriebe, die miteinander gekoppelt und/oder synchronisiert sind.

13. Anordnung nach einem der vorangehenden Ansprüche, gekennzeichnet durch die Verwendung zum Antrieb und/oder Positionieren eines Zylinders (D1, D2, D3, D4) einer Druckmaschine, insbesondere Offsetmaschine mit mehreren für die Druckgebung zusammmenwirkenden Zylindern (D1 - D4), die dreh-, registerverstell- sowie aneinander anstellbar (R, S, T, U, W) gelagert sind, wobei die Zylinder (D1 - D4) mit je einem Rotor (F) des Elektromotors (F, G) zur Bildung eines Direktantriebs (E) verbunden sind.

14. Anordnung nach Anspruch 13, dadurch gekennzeichnet, daß der Elektromotor (F, G) im Rahmen einer Steuerungskette oder eines Regelkreises für die Umfangsregisterverstellung als Stellglied für die Dreh- oder Winkelstellung (S, T) des Zylinders (D1, D2, D3, D4) ausgebildet ist.

15. Anordnung nach Anspruch 13 oder 14, mit einem oder mehreren Druckwerken (3 a - 3 d), an deren jeweiliger Wandung (H) die Zylinder (D1 - D4) stellbar (R, S, T, U, W) gelagert und geführt sind, dadurch gekennzeichnet, daß vom Elektromotor (F, G) der Stator (G) an der Druckwerkswandung (H), und der Rotor (F) an der Antriebswelle (E) des Zylinders (D1, D2, D3, D4) unmittelbar und steif fixiert sind.

16. Anordnung nach Ansprüche 13, 14 oder 15, gekennzeichnet durch eine bauliche Integration des Zylinders (30) der Druckmaschine mit dem Rotor eines Elektromotors.

17. Anordnung nach Anspruch 16, wobei der Zylinder (30) zu seinem Drehantrieb mit einem axial vorspringenden Ansatz (31b) versehen ist, dadurch gekennzeichnet, daß der Ansatz (31b) einstückig mit dem Rotor ausgebildet ist und/oder den Rotor oder einen Teil davon bildet.

18. Anordnung nach nach Anspruch 17, dadurch gekennzeichnet, daß auf oder über dem Außenumfang des Ansatzes (31b) beziehungsweise Rotors ein oder mehrere Magnetelemente (35) und/oder ein magnetischer oder magnetisierbarer Werkstoff angeordnet ist.

19. Anordnung nach Anspruch 17 oder 18, dadurch gekennzeichnet, daß der Ansatz (31b) von einer Teil des Rotors bildenden Hülse (34) umgeben ist, die gegebenenfalls auf ihrem Außenumfang das oder die Magnetelemente (35) und/oder den magnetischen Werkstoff trägt.

20. Anordnung nach einem der Ansprüche 16 bis 19, gekennzeichnet durch einen an seiner Stirnseite angebrachten Halterungsflansch (33), an dem der Ansatz (31b) beziehungsweise Rotor gegebenenfalls lösbar befestigt sind.

21. Verfahren zum Positionieren eines Drehkörpers (D1, D2, D3, D4) quer, schräg und/oder diagonal bezüglich seiner Drehachse (Y) mit der Anordnung nach Anspruch 8 oder einem der Ansprüche 9 - 20 in Verbindung mit Anspruch 8, dadurch gekennzeichnet, daß vor dem Verstellen (R, W) des Drehkörpers (D1, D2, D3, D4) die Arretierung (C) des Stators (G) bezüglich der Wandung (H) gelöst (M), der Stator (G) der Verstellbahn (R, W) des steifen Rotor-Drehkörper-Verbunds (D1, D2, D3, D4; F) nachgeführt und dann wieder arretiert (M) und/oder steif und ortsfest an der Wandung (H) abgestützt wird.

22. Verfahren nach Anspruch 21 mit der Anordnung nach Anspruch 7, dadurch gekennzeichnet, daß während des Stator-Nachführvorgangs die Stator-Exzenterführung (B) und die Drehkörper/Rotor-Exzenterführung (A) miteinander verbunden, gekoppelt und/oder synchronisiert (Q) werden.

23. Verfahren nach Anspruch 22, dadurch gekennzeichnet, daß die beiden Exzenterbuchsen (A, B) vor deren Verbinden, Koppeln oder Synchronisieren (Q) zueinander kongruent und/oder zur Herbeiführung sich deckender Umlaufbahnen ausgerichtet werden.

## Claims

1. Arrangement of an electric motor (F, G) for driving a rotary body rotatably mounted (S,T) on a wall (H), wherein from the electric motor (F, G) the rotor (F) is rigidly and non-rotatably connected to the rotary body (D1, D2, D3, D4) for direct driving (E) thereof, and the stator (G) is supported rigidly detachably and non-displaceably to the wall (H), characterised in that the rotary body (D1, D2, F3, D4) is displaceable with its axis of rotation (y) oblique, transverse and/or diagonal (R, W) in that the rotary body is rotatably mounted (21, 22) inside the wall (H) with its axis of rotation pivoted out (A) eccentrically, and a tracker (B, 23) is disposed on the stator (G) so as to operate in such a manner that the stator (G) accordingly follows the rotary body/rotor displacement motions (R, W).

2. Arrangement according to claim 1, characterised in that the wall (H) has a non-displaceably mounted, preferably bridge-like and/or L-shaped projection (K) on which the stator (G) is mounted.

3. Arrangement according to claim 1 or 2, characterised in that in the electric motor (F, G), the rotor (F), and stator (G) are disposed with such a distance between them and/or are displaceable in such a manner that the air gap (L) defined thereby is variable for equalisation of the rotary body/rotor displacement motions (R, W).

4. Arrangement according to claim 3, characterised in that in the electric motor (F, G) the rotor (F) is disposed on or opposite the stator (G) without a bearing.

5. Arrangement according to one of the above claims, characterised in that the tracker (B, 23) for the stator (G) has a cam guide which is mounted in or on the wall (H) so as to pivot out radially or optionally in or on its projection (K), and which corresponds to the rotary body/rotor cam guide (A, 22).

6. Arrangement according to claim 5, characterised in that both cam guides (A, 22; B, 23) are arranged congruently with one another and/or are formed so as to create mutually overlapping orbits (W, R).

7. Arrangement according to claim 5 or 6, characterised in that the two cam guides (A, 22; B, 23) are coupled together and/or synchronised by a detachable, preferably mechanical connector (Q).

8. Arrangement according to one of the above claims, characterised by a locking device (C), which is in active engagement with the tracker (B, 23) and which is for supporting, locking and/or rigidly connecting the stator (G) relative to the wall (H) and/or its projection (K).

9. Arrangement according to claim 5, 6, 7 or 8 in combination with claim 5, characterised in that at least the stator cam guide (B, 23) is formed as a cam bush (B) which, surrounded by a correspondingly eccentric ball bearing (23), is countersunk into the wall (H) and encompasses the stator (G) in a stationary manner.

10. Arrangement according to claim 8 and 9, characterised in that the stator locking device (C) has one or more locking bodies which are formed for the displacement (M) and positively locking abutment on free, preferably diametrically opposed outer faces of the cam bush (B).

11. Arrangement according to claim 9 or 10, characterised by a rotary drive acting on one or more cam bushes (A, B) and/or on a linear drive acting on the axially displaceably mounted stator.

12. Arrangement according to claim 11, characterised by rotary drives associated with the stator cam bush (B) and the rotary body/rotor cam bush (A) and/or linear drives which are associated with the stator (G) and the rotary body/rotor collar (D1, D2, D3, D4; F) and which are coupled together and/or synchronised.

13. Arrangement according to one of the above claims, characterised by the use, for driving and/or positioning of a cylinder (D1, D2, D3, D4) of a printing press, in particular offset printing press comprising a plurality of cylinders (D1 - D4) which cooperate for the application of print and which are mounted so as to be adjusted by rotation, by register and relative to one another (R, S, T, U, W), wherein the cylinders (D1 - D4) are each connected to a respective cylinder (F) of the electric motor (F, G) in order to form a direct drive (E).

14. Arrangement according to claim 13, characterised in that within the scope of an operating chain or adjustment circuit for the circumference register displacement, the electric motor (F, G) is formed as an actuator for the rotational or angular setting (S, T) of the cylinder (D1, D2, D3, D4).

15. Arrangement according to claim 13 or 14, comprising one or more printing units (3a - 3d), on whose respective walls (h) the cylinders (D1 - D4) are adjustably (R, S, T, U, W) mounted and guided, characterised in that from the electric motor (F, G) the stator (G) is rigidly connected to the pressure unit wall (H) and the rotor (F) is rigidly connected to the drive shaft (E) of the cylinder (D1, D2, D3, D4).

16. Arrangement according to claims 13, 14 or 15, characterised by a structural integration of the cylinder (30) of the printing press with the rotor of an electric motor.

17. Arrangement according to claim 16, wherein for its rotational driving the cylinder (30) is provided with an axially projecting projection (31b), characterised in that the projection (31b) is formed integrally with the rotor and/or forms the rotor or part thereof.

18. Arrangement according to claim 17, characterised in that one or more magnetic elements (35) and/or a magnetic or magnetisable material is disposed on or over the outer circumference of the projection (31b) or rotor respectively.

19. Arrangement according to claim 17 or 18, characterised in that the projection (31b) is surrounded by a sleeve (34) which forms part of the rotor and/or which carries if necessary on its outer circumference the magnetic element (s) (35) and/or the magnetic material.

20. Arrangement according to one of claims 16 to 19, characterised by a holding flange (33) mounted on its end face and to which the projection (31b) or rotor are optionally detachably fixed.

21. Method of positioning a rotary body (D1, D2, D3, D4) transversely, obliquely and/or diagonally relative to its axis of rotation (Y) with the arrangement according to claim 8 or one of claims 9 - 20 in combination with claim 8, characterised in that before displacement (R, W) of the rotary body (D1, D2, D3, D4) the locking (C) of the stator (G) relative to the wall (H) is freed (M), the stator (G) of the adjustment path (R, W) of the rigid rotor/rotary body unit (D1, D2, D3, D4; F) is tracked and is then locked (M) again, and /or is supported rigidly and non-displaceably on the wall (H).

22. Method according to claim 21 with the arrangement according to claim 7, characterised in that during the stator tracking operation the stator cam guide (B) and the rotary body/rotor cam guide (A) are connected together and are coupled and/or synchronised (Q).

23. Method according to claim 22, characterised in that before their connection, coupling or synchronisation (Q) the two cam bushes (A, B) are aligned congruently and/or so as to create mutually overlapping orbits.

## Revendications

1. Arrangement d'un moteur électrique (F,G) pour l'entraînement d'un corps rotatif monté de manière à pouvoir tourner (S,T) sur une paroi (H), selon lequel le rotor (F) du moteur électrique (F,G) est relié rigidement et avec blocage en rotation au corps rotatif (D1,D2,D3,D4) pour l'entraînement direct (E) de ce corps, et le stator (G) est supporté, rigidement et de façon fixe, d'une manière amovible, sur la paroi (H), caractérisé en ce que le corps rotatif (D1,D2,D3,D4) est déplaçable obliquement, transversalement et/ou en diagonale (R,W) par rapport à son axe de rotation (Y), par le fait que le corps rotatif est monté de manière à pouvoir tourner (21,22) à l'intérieur de la paroi (H), avec son axe de rotation (Y) guidé suivant une trajectoire de déviation excentrée (A), et un dispositif d'asservissement (B,23) est monté pour agir sur le stator (G) de telle sorte que le stator (G) suive, de façon correspondante, les mouvements de déplacement (R,W) du corps rotatif/rotor.

2. Arrangement selon la revendication 1, caractérisé en ce que la paroi (H) possède un élément saillant monté fixe (K), de préférence en forme d'étrier et/ou en forme de L, sur lequel est monté le stator (G).

3. Arrangement selon la revendication 1 ou 2, caractérisé en ce que, dans le moteur électrique (F,G), le rotor (F) et le stator (G) sont disposés à une distance mutuelle telle et/ou sont déplaçables de telle sorte que l'entrefer (L) qu'ils délimitent, est modifiable de manière à compenser les mouvements de déplacement (R,W) du corps rotatif/rotor.

4. Arrangement selon la revendication 3, caractérisé en ce que dans le moteur électrique (F,G), le rotor (F) est monté sans palier de rotation sur ou par rapport au stator (G).

5. Arrangement selon l'une des revendications précédentes, caractérisé en ce que le dispositif d'asservissement (B,23) pour le stator (G) possède un guide excentrique produisant une déviation radiale, qui est monté dans ou sur la paroi (H) ou, le cas échéant, son élément saillant (K) et qui correspond au guide excentrique (A,22) du corps rotatif/rotor.

6. Arrangement selon la revendication 5, caractérisé en ce que les deux guides excentriques (A,22; B,23) sont disposés de manière à être mutuellement congruents et/ou sont agencés pour engendrer des orbites coïcidentes (W,R).

7. Arrangement selon la revendication 5 ou 6, caractérisé en ce que les deux guides excentriques (A,22; B,23) sont accouplés entre eux et/ou synchronisés l'un sur l'autre au moyen d'un dispositif de liaison libérable (K), de préférence mécanique.

8. Arrangement selon l'une des revendications précédentes, caractérisé par un dispositif de blocage (C) qui est relié, selon une liaison active, au dispositif d'asservissement (B,23), pour le soutien, le blocage et/ou la liaison rigide du stator (G), par rapport à la paroi (H) et/ou à son élément saillant (K).

9. Arrangement selon la revendication 5, 6, 7 ou 8 en liaison avec la revendication 5, caractérisé en ce qu'au moins le guide excentrique (B,23) du stator est réalisé sous la forme d'une douille excentrique (B), qui est insérée dans la paroi (H) - en étant entourée par un roulement à billes excentrique correspondant (23) - et enveloppe de façon fixe le stator (G).

10. Arrangement selon les revendications 8 et 9, caractérisé en ce que le dispositif (C) de blocage du stator possède un ou plusieurs corps de blocage, qui sont conçus pour assurer le déplacement (M) et l'application, selon une liaison par formes complémentaires, contre des faces extérieures libres, de préférence diamétralement opposées, de la douille excentrique (B).

11. Arrangement selon la revendication 9 ou 10, caractérisé par un dispositif d'entraînement en rotation, qui attaque une ou plusieurs douilles excentriques (A,B) et/ou par un dispositif d'entraînement linéaire, qui attaque le stator monté de manière à être déplaçable axialement.

12. Arrangement selon la revendication 11, caractérisé par des dispositifs d'entraînement en rotation associés à la douille excentrique (B) du stator et à la douille excentrique (A) du corps rotatif/rotor, et/ou par des dispositifs d'entraînement linéaire associés au stator (G) et à l'ensemble composite corps rotatif/rotor (D1,D2,D3, D4;F), qui sont accouplés entre eux et/ou synchronisés l'un sur l'autre.

13. Arrangement selon l'une des revendications précédentes, caractérisé par son utilisation pour entraîner et/ou positionner un cylindre (D1,D2,D3,D4) d'une machine d'impression, notamment d'une machine offset comportant plusieurs cylindres (D1 à D4) coopérant pour réaliser l'impression et qui sont montés de manière à pouvoir tourner, à être amenés en alignement et à être serrés les uns contre les autres (R,S,T,U,W), les cylindres (D1 à D4) étant reliés chacun à un rotor (F) du moteur électrique (F,G) pour former un dispositif d'entraînement direct (E).

14. Arrangement selon la revendication 13, caractérisé en ce que le moteur électrique (F,G) est réalisé, dans le cadre d'une chaîne de commande ou d'un circuit de régulation pour le réglage d'alignement circonférentiel, sous la forme d'un élément de réglage de la position de rotation ou de la position angulaire (S,T) du cylindre (D1,D2,D3,D4).

15. Arrangement selon la revendication 13 ou 14, comportant une ou plusieurs unités d'impression (3a à 3d), sur la paroi respective (H) desquelles les cylindres (D1 à D4) sont montés et guidés de manière à être réglables (R,S,T,U,W), caractérisé en ce que, dans le moteur électrique (F,G), le stator (G) est fixé directement et rigidement à la paroi (H) de l'unité d'impression, et le rotor (F) est fixé directement et rigidement à l'arbre d'entraînement (E) du cylindre (D1,D2,D3,D4).

16. Arrangement selon la revendication 13, 14 ou 15, caractérisé par une intégration, du point de vue construction, du cylindre (30) de la machine d'impression au rotor d'un moteur électrique.

17. Arrangement selon la revendication 16, dans lequel le cylindre (30) comporte, pour son entraînement en rotation, un prolongement (31b) saillant axialement, caractérisé en ce que le prolongement (31b) est réalisé d'un seul tenant avec le rotor et/ou forme le rotor ou une partie de ce dernier.

18. Arrangement selon la revendication 17, caractérisé en ce qu'un ou plusieurs éléments magnétiques (35) et/ou un matériau magnétique ou magnétisable est disposé sur ou au-dessus de la périphérie extérieure du prolongement (31b) ou, suivant le cas, du rotor.

19. Arrangement selon la revendication 17 ou 18, caractérisé en ce que le prolongement (31b) est entouré par un manchon (34) formant une partie du rotor et qui porte, le cas échéant, le ou les éléments magnétiques (35) et/ou le matériau magnétique, sur sa périphérie extérieure.

20. Arrangement selon l'une des revendications 16 à 19, caractérisé par une bride de fixation (33), qui est montée sur sa face frontale et à laquelle le prolongement (31b) ou, suivant le cas, le rotor est fixé, le cas échéant, de façon amovible.

21. Procédé pour positionner un corps rotatif (D1,D2,D3,D4) transversalement, obliquement et/ou en diagonale, par rapport à son axe de rotation (Y), avec l'arrangement selon la revendication 8 ou selon l'une des revendications 9 à 20 en liaison avec la revendication 8, caractérisé en ce qu'avant le déplacement (R,W) du corps rotatif (D1,D2,D3,D4), on desserre (M) le blocage (C) du stator (G) par rapport à la paroi (H), le stator (G) est asservi pour suivre la trajectoire de déplacement (R,W) de l'ensemble composite rigide rotor-corps rotatif (D1,D2,D3,D4;F), puis est à nouveau bloqué (M) et/ou est à nouveau supporté rigidement et de façon fixe sur la paroi (H).

22. Procédé selon la revendication 21 mis en oeuvre avec l'arrangement selon la revendication 7, caractérisé en ce que pendant le processus d'asservissement du stator, le guide excentrique (B) du stator et le guide excentrique (A) du corps rotatif/rotor sont reliés, accouplés et/ou synchronisés entre eux (Q).

23. Procédé selon la revendication 22, caractérisé en ce qu'on amène les deux douilles excentriques (A,B) à être congruentes entre elles avant leur liaison, leur accouplement ou leur synchronisation (Q) et/ou on les aligne pour la formation d'orbites coïcidentes.
